# EUROPÄISCHE PATENTSCHRIFT

(11) **EP 4 414 218 B1**
(45) Veröffentlichungstag und Bekanntmachung des Hinweises auf die Patenterteilung: **28.01.2026**
(21) Anmeldenummer: 24156084.6
(22) Anmeldetag: 06.02.2024
(51) Int. Cl.: B60R 9/06, B60R 9/10

(54) **MODULARES SYSTEM EINES FAHRRADTRÄGERS**
MODULAR SYSTEM OF A BICYCLE CARRIER
SYSTÈME MODULAIRE DE SUPPORT DE BICYCLETTE

(30) Priorität: 10.02.2023 DE 102023103335
(43) Veröffentlichungstag der Anmeldung: 14.08.2024
(73) Patentinhaber: Fiamma S.p.A., 21010 Cardano al Campo (VA) (IT)
(72) Erfinder: Pozzi, John-David, 169424 Singapur (SG)
(74) Vertreter: Kluin Patent

(56) Entgegenhaltungen:
- DE-B3- 102007 035 135
- DE-U1- 202012 009 377
- DE-U1- 29 620 029
- US-A- 5 842 615

## Beschreibung

Die Erfindung betrifft ein modulares System eines Fahrradträgers zur Halterung von Fahrrädern am Heck eines Fahrzeugs.

Ein derartiger Fahrradträger ist bspw. aus der DE 10 2007 035135 B3 und DE 44 27 450 A1 bekannt. Er umfasst eine Trägerbaugruppe, die einen etwa parallel zum Heck des Fahrzeugs ausgerichteten Befestigungsträger und einen üblicherweise etwa senkrecht zum Heck ausgerichteten Auflageträger aufweist. Der Befestigungsträger ist zur Befestigung der Trägerbaugruppe an dem Heck des Fahrzeugs vorgesehen.

Insbesondere kompakte Reisemobile, die auf einem Kastenwagen, auch "Van" genannt, basieren, weisen regelmäßig eine Karosserie mit zwei jeweils an einander gegenüberliegenden Seitenbereichen der Karosserie des Fahrzeugs angelenkten Türflügeln auf. Es ist bekannt, zur Befestigung der Trägerbaugruppe eine Schienenanordnung vorzusehen, die fest, bspw. durch Verkleben und/oder Verschrauben und/oder Vernieten an einer der Türen des Fahrzeugs befestigbar ist. An dem Befestigungsträger sind dann Befestigungsmittel vorgesehen, die zur Anbringung an der Schienenanordnung geeignet sind.

Durch die Anbringung der Trägerbaugruppe mithilfe der Schienenanordnung an der Tür des Fahrzeugs wird die Trägerbaugruppe zusammen mit der Tür verschwenkt, sodass ein Öffnen der Tür auch bei montiertem Fahrradträger in der Regel, selbst wenn er Fahrräder trägt, möglich ist.

Ein auf diese Weise an einer der Hecktüren eines Fahrzeugs montierter Fahrradträger ist regelmäßig nur zum Transport von zwei konventionellen Fahrrädern, die üblicherweise zwischen 10 und 16 kg wiegen können, geeignet. Die Tragkraft dieses Fahrradträgers ist insbesondere auf diesen Transport beschränkt, da die Tragkräfte von den die Tür tragenden Scharnieren aufgenommen werden müssen. Auch führt die aufgrund der Befestigung an nur einer Tür bezogen auf die Fahrzeugmitte außermittige Anbringung des Fahrradträgers regelmäßig dazu, dass von dessen Auflageträger gehaltene Rinnenanordnungen bezogen auf ihre Längserstreckung unsymmetrisch getragen werden, wodurch die Rinnenanordnungen und die Trägerbaugruppe mit all ihren Komponenten unsymmetrisch biegebeansprucht sind. Aufgrund seiner begrenzten Tragfähigkeit ist ein Fahrradträger mit einer derart an einer Hecktür angebrachten Trägerbaugruppe lediglich für den Transport von zwei konventionellen Fahrrädern geeignet.

Kompakte Reisemobile basieren auf einer Mehrzahl unterschiedlicher Vans, die sich unter anderem in der Ausbildung der Hecktüren und deren Scharnieranordnungen unterscheiden. Nachteilig ist, dass eine optimale Montage eine Anpassung des Fahrradträgers an den jeweilen Van erfordert und entsprechend angepasste Fahrradträger vom Hersteller bzw. Lieferanten vorgehalten werden müssen. Hiermit sind erhebliche Produktions- und Lagerhaltungskosten verbunden.

Zudem haben in jüngerer Vergangenheit Fahrräder, die eine elektromotorische Unterstützung ermöglichen, auch "Elektrofahrräder" oder kurz "E-Bikes" genannt, an Verbreitung zugenommen. Der Vorteil dieser E-Bikes ist, dass durch die elektromotorische Unterstützung auch weniger gut konditionierte Personen größere Fahrstrecken unter elektromotorischer Unterstützung, die bspw. 50 km oder auch mehr betragen können, mit dem E-Bike absolvieren können. Auch erleichtert die elektromotorische Unterstützung wesentlich ein Bergauffahren.

Nachteilig ist bei diesen E-Bikes jedoch ihre gegenüber konventionellen Fahrrädern erheblich größere Masse, die regelmäßig im Bereich von 20 kg oder auch deutlich darüber beträgt.

Da herkömmliche, an einer Hecktür eines Fahrzeugs in der beschriebenen Weise befestigte Fahrradträger regelmäßig keine zum Transport von zwei E-Bikes erforderliche Tragfähigkeit aufweisen, sind speziell für den Transport von E-Bikes geeignete Fahrradträger mit einer ausreichenden Tragfähigkeit bekannt geworden. Häufig sind diese zur Montage an einer Anhängerkupplung eines Fahrzeugs vorgesehen.

Nachteilig ist bei diesen Fahrradträgern jedoch, dass sich die Hecktüren eines Fahrzeugs bei montiertem Fahrradträger nicht mehr öffnen lassen.

Es sind daher Fahrradträger zur Befestigung an einer Anhängerkupplung eines Fahrzeuges bekannt geworden, die ein nach unten Schwenken des die Fahrräder tragenden Auflageträgers erlauben.

Nachteilig ist jedoch einerseits der hiermit verbundene, konstruktive Aufwand. Andererseits lassen sich die Türen oft auch bei nach unten geklappter Baugruppe zusammen mit von dem Auflageträger getragenen Fahrrädern nicht öffnen, da die Türen oder Teile hiervon mit den Fahrrädern kollidieren.

Schließlich ist es von Nachteil, dass für den Transport von E-Bikes regelmäßig ein anderer Fahrradträger installiert werden muss, was seitens des Kunden zusätzlichen Montageaufwand und zusätzliche Kosten bedeutet. Auch erhöhen sich herstellerseitig die Produktions- und Nachhaltungskosten durch die Notwendigkeit, für den Transport von E-Bikes einen anderen Fahrradträgern produzieren und vorhalten zu müssen.

Der Erfindung liegt daher die Aufgabe zugrunde, ein modulares System eines Fahrradträgers zur Halterung von Fahrrädern am Heck eines Fahrzeugs zu schaffen, welches einen universellen Einsatz an verschiedenen Vans und wahlweise für konventionelle Fahrräder oder E-Bikes erlaubt.

Diese Aufgabe wird durch ein modulares System eines Fahrradträgers zur Halterung von Fahrrädern am Heck eines eine Karosserie aufweisenden Fahrzeugs gelöst, welches eine Befestigungsschienenanordnung zur Befestigung an einer um eine Scharnierachse schwenkbaren Hecktür eines Fahrzeugs, eine Trägerbaugruppe umfassend einen Befestigungsträger und einen an dem Befestigungsträger angelenkten Auflageträger sowie eine Befestigungsrahmenanordnung zur um eine Scharnierachse parallelen Schwenkachse (S) verschwenkbaren Befestigung an der Karossiere eines Fahrzeugs aufweist. Erfindungsgemäß umfasst das modulare System eine Mehrzahl von Befestigungsschienenanordnungen und eine Mehrzahl von Befestigungsrahmenanordnungen, die zur Montage an unterschiedliche Fahrzeuge angepasst sind, wobei, wenn der Fahrradträger zum Transport von konventionellen Fahrrädern vorgesehen ist, die Trägerbaugruppe zur Befestigung an einer Befestigungsschienenanordnung oder, wenn der Fahrradträger zum Transport von E-Bikes vorgesehen ist, zur Befestigung an einer Befestigungsrahmenanordnung ausgebildet ist.

Um die Öffenbarkeit zumindest einer der Hecktüren des Fahrzeugs auch bei einem zum Transport von E-Bikes geeigneten Fahrradträger zu ermöglichen, ist die Befestigungsanordnung erfindungsgemäß zur um die Schwenkachse verschwenkbaren Befestigung an einem an der Karosserie des Fahrzeugs angebrachten Scharnierteil eines die Hecktür an der Karossiere anlenkenden Scharnieranordnung vorgesehen. Die Haltekräfte werden somit an Stellen in die Karossiere eingeleitet, die konstruktiv bedingt eine ausreichend hohe Tragkraft aufweisen.

Aufgrund dieser Ausbildung hat das erfindungsgemäße modulare System unter anderem die folgenden Vorteile:
- Es muss lediglich ein einzige, für den Transport von konventionellen Fahrrädern geeignete Trägerbaugruppe vorgehalten werden, die an unterschiedliche Vans angepasste Befestigungsschienenanordnungen montiert werden kann. So lassen sich Produktions- und Lagerhaltungskosten einsparen. Auch kann die Trägerbaugruppe im Falle eines Fahrzeugwechsels weiterverwendet werden.
- Es muss lediglich ein einzige, für den Transport von E-Bikes geeignete Trägerbaugruppe vorgehalten werden, die an unterschiedliche Vans angepasste Befestigungsrahmenanordnungen montiert werden kann. So lassen sich wiederum Produktions- und Lagerhaltungskosten einsparen. Auch kann die Trägerbaugruppe wiederum im Falle eines Fahrzeugwechsels weiterverwendet werden.

Die für den Transport von konventionellen Fahrrädern und die für den Transport von E-Bikes geeigneten Trägerbaugruppen können konstruktiv für die jeweils erforderlichen Tragkräfte ausgelegt sein. So können die für den Transpost von konventionellen Fahrrädern geeigneten Befestigungsträger und/oder Auflageträger aus billigerem und leichteren Aluminiumwerkstoffen gefertigt sein, wohingegen die für den Transport von E-Bikes geeigneten Befestigungsträger und/oder Auflageträger aus teurerem und schwereren Edelstahlwerkstoffen gefertigt sein können. Die Erfindung erfasst jedoch auch ein modulares System, das eine (einzige kompatible) Trägerbaugruppe umfasst, die sowohl an der Befestigungsschienenanordnung, als auch an der Befestigungsrahmenanordnung montierbar ist und eine Tragfähigkeit aufweist, die auch zum Transport von E-Bikes ausreicht. Da dann nur noch ein einziger Typ der Befestigungsbaugruppe vorgehalten werden muss, lassen sich Lagerhaltungskosten weiterhin senken.

Um ein ungewünschtes Verschwenken des Befestigungsrahmen um die Schwenkachse zu verhindern, sind vorzugsweise Mittel zur Arretierung vorgesehen, die - besonders bevorzugt - in einem Abstand von der Schwenkachse angeordnet sind.

Damit der Fahrradträger möglichst wenig von der Hecktür des Fahrzeugs absteht, wenn keine Fahrräder transportiert werden, ist der Auflageträger vorzugsweise derart an dem Befestigungsträger angelenkt, dass er zwischen einer angeklappten Außerfunktionsposition und einer ausgeklappten Transportposition verschwenkbar ist.

Eine weitere bevorzugte Ausführungsform des erfindungsgemäßen Systems umfasst eine an die Schienenanordnung und/oder an die Befestigungsrahmenanordnung anbringbare Leiteranordnung. Diese kann insbesondere zur Anbringung vorgesehen sein, wenn die Trägerbaugruppe nicht an der Schienenanordnung angebracht ist, sondern an der Befestigungsrahmenanordnung. Die Leiteranordnung kann insbesondere dazu dienen, den Dachbereich des Fahrzeugs zu erreichen, um bspw. Gegenstände an einem Dachträger zu befestigen, oder um auf dem Dach montierte Geräte, wie Photovoltaik Panels oder Antennenanlagen erreichen zu können.

Es kann vorgesehen sein, dass der Fahrradträger an einer ersten Fahrzeug-Hecktür, insbesondere an einer rechten Fahrzeug-Hecktür, und eine Leiteranordnung an einer zweiten Fahrzeug-Hecktür, insbesondere an einer linken Fahrzeug-Hecktür, angeordent werden kann. Dazu ist der Fahrradträger bevorzugt derart ausgebildet, dass der Fahrradträger an der ersten Fahrzeug-Hecktür, insbesondere der rechten Fahrzeug-Hecktür, und die Leiteranordnung an der zweiten Fahrzeug-Hecktür, insbesondere der linken Fahrzeug-Hecktür, anordenbar sind. Besonders bevorzugt kann der Fahrradträger sowohl in der angeklappten Außerfunktionsposition als auch in der ausgeklappten Transportposition derart an der Hecktür eines Fahrzeugs angeordnet sein, dass zusätzlich neben dem Fahrradträger eine Leiter oder Leiteranordnung vorgesehen sein kann. Dies ist bevorzugt sowohl möglich wenn der Fahrradträger mittels der Befestigungsschienenanordnung montiert ist, als auch wenn der Fahrradträger mittels der Befestigungsrahmenanordnung montiert ist.

In der Zeichnung ist ein Ausführungsbeispiel eines erfindungsgemäßen modularen Systems dargestellt. Es zeigen:
- Fig. 1: eine Befestigungsschienenanordnung des modularen Systems in einer zur Montage an einer Hecktür eines Fahrzeugs vorgesehenen Positionierung;
- Fig. 2: eine Trägerbaugruppe des modularen Systems, die für den Transport von konventionellen Fahrrädern vorgesehen ist;
- Fig. 3: eine Befestigungsrahmenanordnung des modularen Systems;
- Fig. 4: eine Trägerbaugruppe des modularen Systems, die für den Transport von E-Bikes vorgesehen ist;
- Fig. 5: die Trägerbaugruppe, die für den Transport von konventionellen Fahrrädern vorgesehen ist, im an die Befestigungsschienenanordnung montierten Zustand;
- Fig. 6: die Trägerbaugruppe, die für den Transport von E-Bikes vorgesehen ist, im an die Befestigungsrahmenanordnung montierten Zustand;
- Fig. 7: eine Leiteranordnung des modularen Systems; sowie
- Fig. 8: die Leiteranordnung im an die Befestigungsschienenanordnung montierten Zustand.

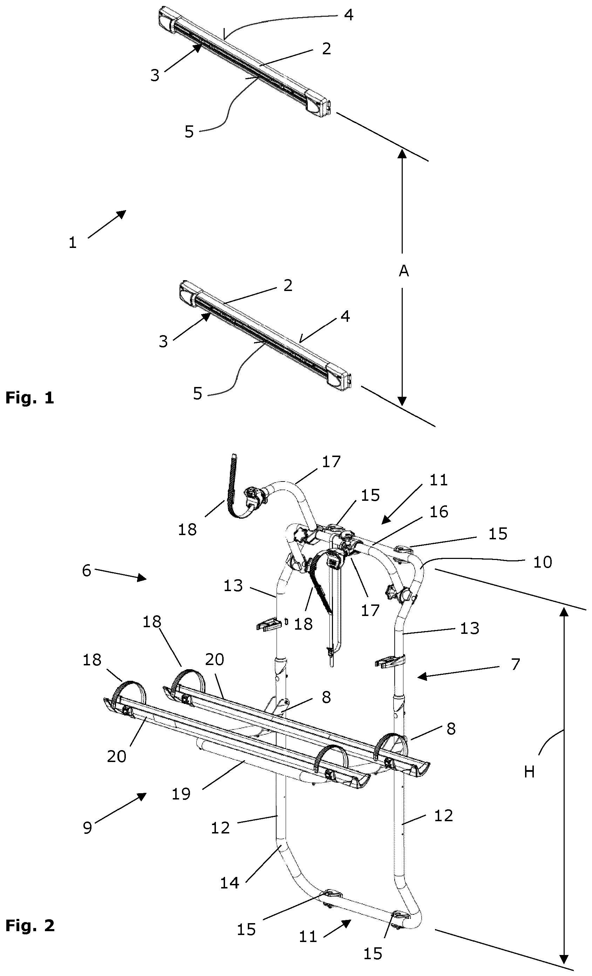

Das in der Zeichnung dargestellte Ausführungsbeispiel des modularen Systems eines Fahrradträgers 100 umfasst eine Mehrzahl von Befestigungsschienenanordnung 1, die zur festen Montage an einer Hecktür von unterschiedlichen, in der Zeichnung nicht dargestellten Fahrzeugen, bspw. an unterschiedlichen Vans, vorgesehen sind. In der Zeichnung ist beispielhaft nur eine für einen bestimmten Van vorgesehene Befestigungsschienenanordnung dargestellt. Jede Befestigungsschienenanordnung weist zwei Befestigungsschienen 2 auf. Ihre Befestigung an der Hecktür kann insbesondere durch Verkleben, Verschrauben und/oder Vernieten erfolgen. Fig. 1 zeigt die Befestigungsschienen 2 in einer parallelen zueinander angeordneten, voneinander beabstandeten Positionierung, in welcher sie üblicherweise an der Hecktür befestigt sind.

Die Befestigungsschienen 2 weisen jeweils eine C-förmige Nut 3 auf, die auf der einer Befestigungsseite 4 abgewandten Montageseite 5 offen ist.

Das modulare System umfasst des Weiteren eine Trägerbaugruppe 6 mit einem Befestigungsträger 7 und einem an dem Befestigungsträger 7 über Scharniere 8 angelenkten Auflageträger 9, die für den Transport von zwei konventionellen Fahrrädern und zur Montage an einer Befestigungsschienenanordnung 1 vorgesehen und in Fig. 2 dargestellt ist. Der Befestigungsträger 7 umfasst eine Rohranordnung 10 in der Gestalt eines Recktecks mit abgerundeten Ecken, wobei einander gegenüberliegende Endbereiche 11 aus einer von Seitenbereichen 12 aufgespannten Ebenen gleichsinnig abgewinkelt sind. Die Rohranordnung ist aus einem Aluminiumwerkstoff gefertigt.

Die Seitenbereiche 12 können zweiteilig ausgebildet sein und jeweils teleskopisch zueinander verschiebbare Rohrabschnitte 13, 14 umfassen, sodass die Höhe H des Befestigungsträger 7 variierbar und an einen Abstand A, in den die Befestigungsschienen 2 an der Hecktür montiert sind, anpassbar ist.

An den Endbereichen 11 sind Befestigungseinrichtungen 15 vorgesehen, die der Befestigung des Befestigungsträgers 7 an der Befestigungsschienenanordnung 1 dienen. Jede Befestigungseinrichtung 15 kann eine in der Zeichnung nicht erkennbare Schraube umfassen, die zum Eindrehen in eine in der Zeichnung ebenfalls nicht erkennbare, in die C-Nut eingeschobene Rechteckmutter dient.

An dem oberen Endbereich 11 des Befestigungsträgers 7 ist eine Querrohranordnung 16 vorgesehen, welche der Anbringung von Distanzhaltern 17 dient. Sie umfassen Befestigungsriemen 18, die der Fixierung eines Rahmenteils eines in der Zeichnung nicht dargestellten Fahrrads dienen.

Der Auflageträger 9 umfasst ein U-förmiges Rohr 19, an dessen beiden Enden die Scharniere 8 angeordnet sind. Das U-förmige Rohr trägt zwei Führungsrinnen 20, die jeweils dem Abstützen der beiden Räder eines Fahrrades dienen. Zu deren Fixierung sind wiederum Befestigungsriemen 18 vorgesehen.

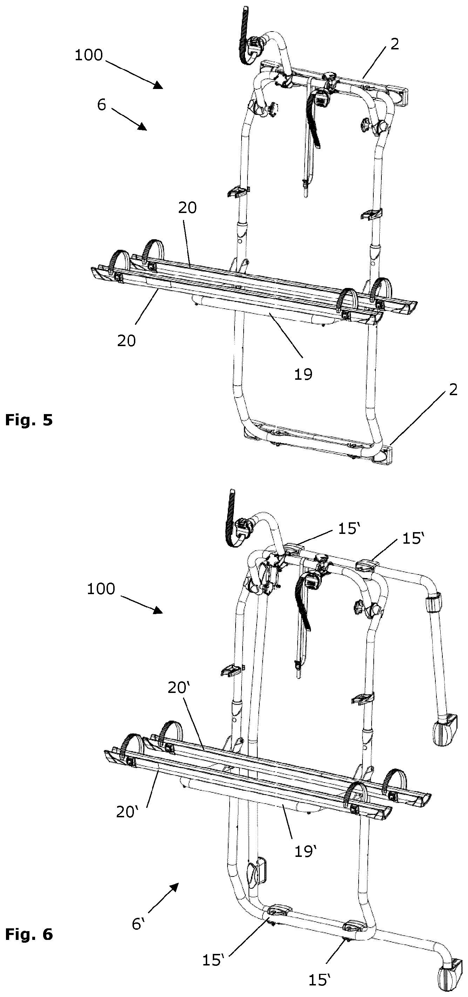

Fig. 5 zeigt die Trägerbaugruppe 6 in an den Befestigungsschienen 2 montierten Zustand. Da die Befestigungsschienen 2 regelmäßig an einer von zwei Hecktüren des Fahrzeugs und damit außermittig angebracht sind, sind die Führungsrinnen 20 nicht symmetrisch aus dem U-förmigen Rohr 19 angeordnet, sondern so verschoben, dass von den Führungsrinnen 20 getragene Fahrräder zur Mitte des Fahrzeugs hin versetzt transportiert werden. Fig. 5 zeigt die Verhältnisse bei an der rechten Hecktür eines Fahrzeugs angebrachten Befestigungsschienen 2. Dieser Fahrradträger 100 ist zum Transport von konventionellen Fahrrädern vorgesehen.

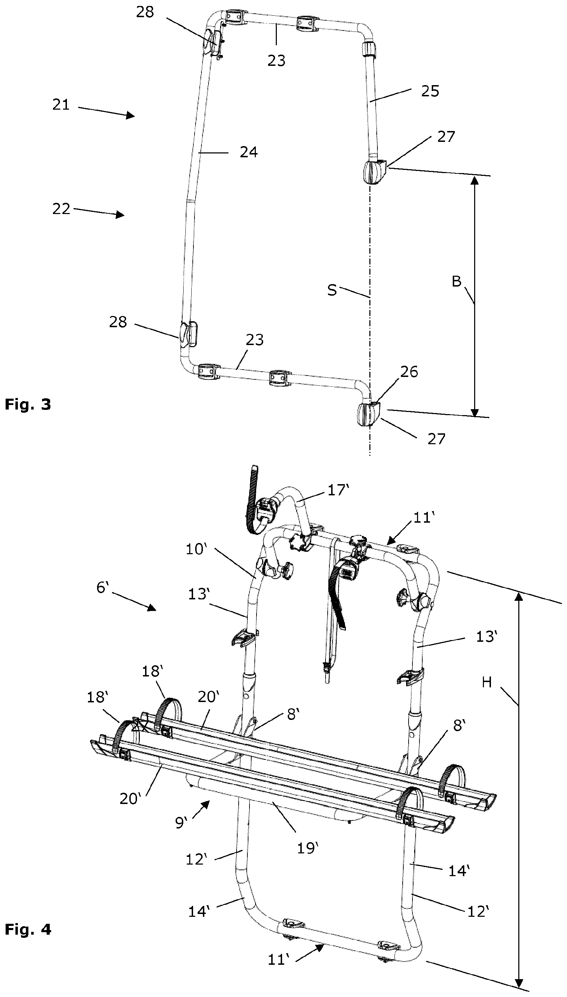

Das modulare System des Fahrradträgers umfasst des Weiteren eine Befestigungsrahmenanordnung 21, die in Fig. 3 dargestellt ist. Sie umfasst ein Rahmenrohr 22 mit zwei parallelen Querrohrabschnitten 23. Die Querrohrabschnitte 23 sind an einem, in Fig. 3 links dargestellten Ende über einen Verbindungsrohrabschnitt 24 miteinander verbunden. Die beiden anderen Enden der Querrohrabschnitte 23 sind jeweils gemäß Fig. 3 nach unten abgewinkelt. Die abgewinkelten Bereiche 25, 26 bilden Befestigungsschenkel, und hierzu sind an ihren freien Enden Befestigungseinrichtungen 27 vorgesehen, die zur um eine Schwenkachse S verschwenkbaren Befestigung an einem an der Karosserie des Fahrzeugs angebrachten Scharnierteil einer die Hecktür an der Karosserie anlenkenden Scharnieranordnung vorgesehen ist.

An den Verbindungsrohrabschnitt 24 sind Mittel 28 zur Arretierung der Befestigungsrahmenanordnung 21 gegen ein Verschwenken um die Schwenkachse S vorgesehen. Die Befestigungsmittel 28 sind derart ausgebildet, dass sie mit an dem Fahrzeug angebrachten Gegenmitteln in formschlüssigen Eingriff bringbar sind, bspw. mithilfe eines einschiebbaren Sicherungssplints, der in der Zeichnung nicht gezeigt ist.

Das modulare System kann eine Mehrzahl unterschiedlicher Befestigungsrahmenanordnungen 21 umfassen, die sich im Abstand B der Befestigungseinrichtung 27, der Anordnung der Mittel 28, der Längen der Querabschnitte 23, der Länge des Verbindungsrohrabschnittes 24 und/oder der Ausgestaltung der Befestigungseinrichtungen 27 voneinander dahin gehend unterscheiden, dass die Befestigungsrahmenanordnung 21 an die durch einen bestimmten Fahrzeugtyp vorgegebenen Anforderungen angepasst ist.

Das modulare System umfasst des Weiteren eine in Fig. 4 dargestellte Trägerbaugruppe 6' mit einem Befestigungsträger 7' und einem an dem Befestigungsträger 7' über Scharniere 8' angelenkten Auflageträger 9', die für den Transport von zwei E-Bikes und zur Montage an einer Befestigungsrahmenanordnung 21 vorgesehen ist. Der Befestigungsträger 7' umfasst eine Rohranordnung 10' in der Gestalt eines Recktecks mit abgerundeten Ecken, wobei einander gegenüberliegende Endbereiche 11' aus einer von Seitenbereichen 12' aufgespannten Ebenen gleichsinnig abgewinkelt sind. Die Rohranordnung ist aus einem Edelstahlwerkstoff gefertigt.

Die Seitenbereiche 12' können zweiteilig ausgebildet sein und jeweils teleskopisch zueinander verschiebbare Rohrabschnitte 13', 14' umfassen, sodass die Höhe H des Befestigungsträger 7' variierbar und an verschiedene Abstände der Querabschnitte 23 anpassbar ist.

An dem oberen Endbereich 11 des Befestigungsträgers 7 ist eine Querrohranordnung 16 vorgesehen, welche der Anbringung von Distanzhaltern 17 dient. Sie umfassen Befestigungsriemen 18, die der Fixierung eines Rahmenteils eines in der Zeichnung nicht dargestellten Fahrrads dienen.

Der Auflageträger 9' umfasst ein U-förmiges Rohr 19', an dessen beiden Enden die Scharniere 8' angeordnet sind. Das U-förmige Rohr trägt zwei Führungsrinnen 20', die jeweils dem Abstützen der beiden Räder eines Fahrrades dienen. Zu deren Fixierung sind wiederum Befestigungsriemen 18' vorgesehen.

Fig. 6 zeigt die Befestigungsrahmenanordnung 21 mit hieran angebrachter Trägerbaugruppe 6'. Dabei ist die Trägerbaugruppe 6' derart positioniert, dass sich seitlich etwa symmetrisch zur Fahrzeugmittelachse erstreckt, sodass die Führungsrinnen 20' beidseitig etwa um die gleichen Beträge über das U-förmige Rohr 19' hinausragen.

Die Befestigungseinrichtungen 15' sind zur Anbringung an die Querrohrabschnitte 23 des Rahmenrohrs 22 angepasst. Zur Erhöhung der Tragfähigkeit der Trägerbaugruppe 6' kann das U-förmige Rohr 19 aus einem eine höhere Tragfähigkeit bereitstellenden Material gefertigt sein, bspw. aus Edelstahl gefertigt sein.

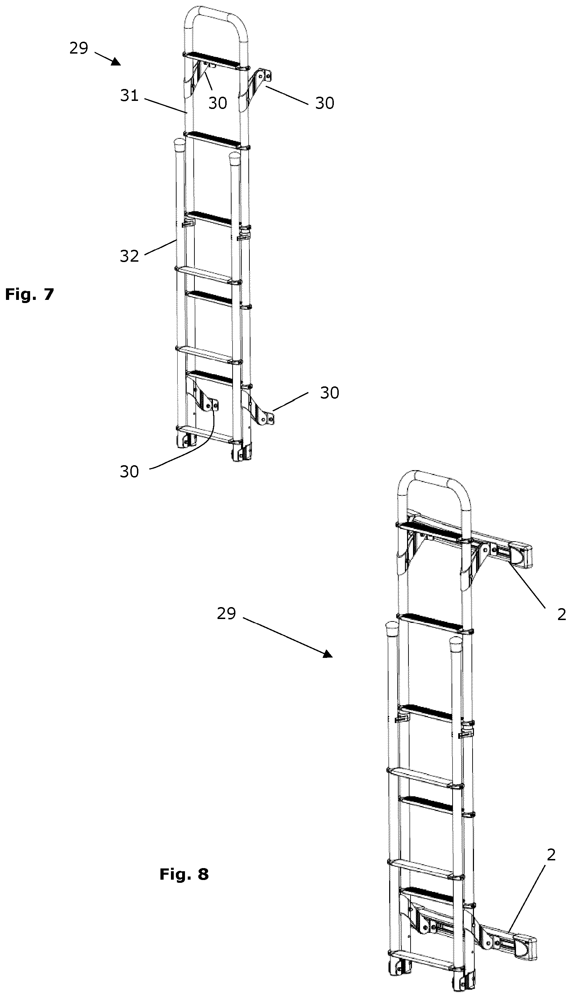

Das modulare System umfasst des Weiteren, wie in Fig. 7 dargestellt ist, eine Leiteranordnung 29, die Befestigungseinrichtungen 30 aufweist, welche zur Befestigung an der Befestigungsschienenanordnung 1 vorgesehen sind. Um den vertikalen Abstand der Befestigungseinrichtungen 30 an den Abstand A der beiden Befestigungsschienen 2 des Befestigungsschienenanordnung 1 anpassen zu können, sind die Befestigungseinrichtungen 30 derart ausgebildet, dass sie gemäß Fig. 7 in vertikaler Richtung verschiebbar und in einer gewünschten Position zueinander fixierbar sind.

Die Leiteranordnung umfasst ein feststehendes Leiterteil 31 und ein scharniergelenkig an diesem angelenktes Klappteil 32. Es wird aus seiner in Fig. 7 dargestellten, angeklappten Position nach unten ausgeklappt, wenn die Leiteranordnung genutzt werden soll.

Fig. 8 zeigt die Leiteranordnung 29 im an Befestigungsschienen 2 befestigten Zustand.

### Bezugszeichenliste:

- 100: Fahrradträger
- 1: Befestigungsschienenanordnung
- 2: Befestigungsschienen
- 3: C-Nut
- 4: Befestigungsseite
- 5: Montageseite
- 6: Trägerbaugrupp
- 7: Befestigungsträger
- 8: Scharniere
- 9: Auflageträger
- 10: Rohranordnung
- 11: Endbereiche
- 12: Seitenbereiche
- 13: Rohrabschnitt
- 14: Rohrabschnitt
- 15: Befestigungseinrichtung
- 16: Querrohranordnung
- 17: Distanzhalter
- 18: Befestigungsriemen
- 19: Rohr
- 20: Führungsrinnen
- 21: Befestigungsrahmenanordnung
- 22: Rahmenrohr
- 23: Querrohrabschnitt
- 24: Verbindungsrohrabschnitt
- 25: abgewinkelter Bereich
- 26: abgewinkelter Bereich
- 27: Befestigungseinrichtungen
- 28: Mittel
- 29: Leiteranordnung
- 30: Befestigungseinrichtung
- 31: Leiterteil
- 32: Klappteil

- A: Abstand
- B: Abstand
- H: Höhe
- S: Schwenkachse

## Patentansprüche

1. Modulares System eines Fahrradträgers (100) zur Halterung von Fahrrädern am Heck eines eine Karosserie aufweisenden Fahrzeugs, mit
- einer Befestigungsschienenanordnung (1) zur Befestigung an einer um eine Scharnierachse schwenkbaren Hecktür eines Fahrzeugs;
- einer Trägerbaugruppe (6) umfassend einen Befestigungsträger (7) und einen an dem Befestigungsträger (7) angelenkten Auflageträger (9); sowie
- eine Befestigungsrahmenanordnung (21) zur um eine Scharnierachse parallelen Schwenkachse (S) verschwenkbaren Befestigung an der Karossiere eines Fahrzeugs,
wobei das modulare System eine Mehrzahl von Befestigungsschienenanordnungen (1) und eine Mehrzahl von Befestigungsrahmenanordnungen (21) umfasst, welche an unterschiedliche Fahrzeuge montierbar sind, wobei die Trägerbaugruppe (6) derart ausgebildet ist, dass die Trägerbaugruppe (6) wahlweise an einer Befestigungsschienenanordnung (1) oder an einer Befestigungsrahmenanordnung (21) befestigt werden kann,
wobei die Befestigungsrahmenanordnung (21) zur um die Schwenkachse (S) verschwenkbaren Befestigung an einem an der Karosserie angebrachten Scharnierteil einer die Hecktür an der Karosserie anlenkenden Scharnieranordnung vorgesehen ist.

2. System nach Anspruch 1, **dadurch gekennzeichnet, dass** die Befestigungsrahmenanordnung (21) derart ausgebildet und eine Trägerbaugruppe (6) vorgesehen ist, dass ein diese Befestigungsrahmenanordnung (1) und diese Trägerbaugruppe (6) umfassender Fahrradträger (100) eine Tragfähigkeit aufweist, die zum Transport von zwei E-Bikes ausgelegt ist.

3. System nach Anspruch 1 oder 2, **dadurch gekennzeichnet, dass** Mittel (28) zur Arretierung der Befestigungsrahmenanordnung (21) gegen ein Verschwenken um die Schwenkachse (S) vorgesehen sind.

4. System nach einem der Ansprüche 1 bis 3, **dadurch gekennzeichnet, dass** der Auflageträger (9) derart an dem Befestigungsträger (7) angelenkt ist, dass er zwischen einer angeklappten Außerfunktionsposition und einer ausgeklappten Transportposition verschwenkbar ist.

5. System nach einem der Ansprüche 1 bis 4, **dadurch gekennzeichnet, dass** eine an die Schienenanordnung (1) und/oder Befestigungsrahmenanordnung (21) anbringbare Leiteranordnung (29) vorgesehen ist.

6. System nach einem der Ansprüche 1 bis 4, **dadurch gekennzeichnet, dass** der Fahrradträger (100) derart ausgebildet ist, dass der Fahrradträger (100) an einer ersten Fahrzeug-Hecktür, insbesondere einer rechten Fahrzeug-Hecktür, und eine Leiteranordnung an einer zweiten Fahrzeug-Hecktür, insbesondere einer linken Fahrzeug-Hecktür, anordenbar sind.

## Claims

1. Modular system of a bicycle carrier (100) for holding bicycles at the rear of a vehicle that has a body, having
- a fastening-rail arrangement (1) for being fastened to a rear door of a vehicle that is pivotable about a hinge axis;
- a carrier assembly (6) which comprises a fastening carrier (7) and a support carrier (9) articulated on the fastening carrier (7); and
- a fastening-frame arrangement (21) for being fastened to the body of a vehicle so as to be pivotable about a hinge-axis-parallel pivot axis (S),
wherein the modular system comprises a plurality of fastening-rail arrangements (1) and a plurality of fastening-frame arrangements (21) that are mountable on different vehicles, wherein the carrier assembly (6) is configured in such a way that the carrier assembly (6) can be fastened selectively to a fastening-rail arrangement (1) or to a fastening-frame arrangement (21), wherein the fastening-frame arrangement (21) is intended to be fastened to a hinge part, attached to the body, of a hinge arrangement, by which the rear door is articulated on the body, so as to be pivotable about the pivot axis (S).

2. System according to Claim 1, **characterized in that** the fastening-frame arrangement (21) is configured, and a carrier assembly (6) is provided, in such a way that a bicycle carrier (100) comprising said fastening-frame arrangement (1) and said carrier assembly (6) has a load-bearing capacity which is designed for transporting two e-bikes.

3. System according to Claim 1 or 2, **characterized in that** provision is made of means (28) for locking the fastening-frame arrangement (21) against pivoting about the pivot axis (S).

4. System according to one of Claims 1 to 3, **characterized in that** the support carrier (9) is articulated on the fastening carrier (7) in such a way as to be pivotable between a folded-in non-functional position and a folded-out transport position.

5. System according to one of Claims 1 to 4, **characterized in that** provision is made of a ladder arrangement (29) which is attachable to the rail arrangement (1) and/or to the fastening-frame arrangement (21) .

6. System according one of Claims 1 to 4, **characterized in that** the bicycle carrier (100) is configured in such a way that the bicycle carrier (100) is arrangeable on a first vehicle rear door, in particular a right-hand vehicle rear door, and a ladder arrangement is arrangeable on a second vehicle rear door, in particular a left-hand vehicle rear door.

## Revendications

1. Système modulaire d'un porte-bicyclettes (100) destiné à maintenir des bicyclettes à l'arrière d'un véhicule comportant une carrosserie, avec
- un ensemble rail de fixation (1) destiné à être fixé sur une porte arrière d'un véhicule pouvant pivoter autour d'un axe de charnière ;
- une structure de support (6) comprenant un support de fixation (7) et un support d'appui (9) articulé sur le support de fixation (7) ; et également
- un ensemble cadre de fixation (21) destiné à être fixé sur la carrosserie d'un véhicule de manière à pouvoir pivoter par rapport à un axe de pivotement (S) parallèle à un axe de charnière,
le système modulaire comprenant une multitude d'ensembles rails de fixation (1) et une multitude d'ensembles cadres de fixation (21), qui peuvent être montés sur différents véhicules, la structure de support (6) étant réalisée de telle manière que la structure de support (6) peut être fixée au choix sur un ensemble rail de fixation (1) ou sur un ensemble cadre de fixation (21),
l'ensemble (21) de cadre de fixation étant prévu pour être fixé, de manière à pouvoir pivoter autour de l'axe de pivotement (S), sur une partie charnière, installée sur la carrosserie, d'un ensemble charnière articulant la porte arrière sur la carrosserie.

2. Système selon la revendication 1, **caractérisé en ce que** l'ensemble cadre de fixation (21) est formé et une structure de support (6) est prévue de telle manière qu'un porte-bicyclettes (100) comprenant ledit ensemble cadre de fixation (1) et ladite structure de support (6) présente une capacité de charge qui est conçue pour transporter deux vélos électriques.

3. Système selon la revendication 1 ou 2, **caractérisé en ce que** des moyens (28) sont prévus pour bloquer l'ensemble cadre de fixation (21) pour empêcher un pivotement autour de l'axe de pivotement (S).

4. Système selon l'une des revendications 1 à 3, **caractérisé en ce que** le support d'appui (9) est articulé sur le support de fixation (7) de telle manière qu'il peut être pivoté entre une position hors service repliée et une position de transport dépliée.

5. Système selon l'une des revendications 1 à 4, **caractérisé en ce qu'**un ensemble échelle (29) pouvant être installé sur l'ensemble rail (1) et/ou sur l'ensemble cadre de fixation (21) est prévu.

6. Système selon l'une des revendications 1 à 4, **caractérisé en ce que** le porte-bicyclettes (100) est formé de telle manière que le porte-bicyclettes (100) peut être disposé sur une première porte arrière de véhicule, en particulier une porte arrière droite de véhicule, et un ensemble échelle peut être disposé sur une seconde porte arrière de véhicule, en particulier une porte arrière gauche de véhicule.
